# EUROPÄISCHE PATENTANMELDUNG

(11) **EP 0 541 926 A1**
(43) Veröffentlichungstag der Anmeldung: **19.05.1993**
(21) Anmeldenummer: 92115634.5
(22) Anmeldetag: 12.09.1992
(51) Int. Cl.: C08L 67/02, C08L 77/00, C08K 5/353, C09J 167/02, C09J 177/00

(54) **Polyamid-Polyester Mischungen**

(30) Priorität: 14.11.1991 DE 4137432; 23.11.1991 DE 4138510
(71) Anmelder: HÜLS AKTIENGESELLSCHAFT, D-45764 Marl (DE)
(72) Erfinder: Mügge, Joachim, Dr., W-4358 Haltern (DE); Sosna, Friedrich, Dr., W-4270 Dorsten 19 (DE)

(57) **Zusammenfassung**

Es soll eine Formmasse zur Verfügung gestellt werden, die als Verträglichkeitsvermittler in Thermoplast-Blends oder als haftvermittelnde Schicht in Verbundwerkstoffen wirksam ist.

Diese Aufgabe wird durch eine Formmasse erfüllt, die ein Polykondensat aus
A. einem Polyamid
B. einem Polyester
C. einem Oxazolin-Derivat
enthält.

Mit Hilfe der Erfindung gelingt es, Stoffe mit den gewünschten Eigenschaften bereitzustellen.

## Beschreibung

Gegenstand der Erfindung sind Formmassen enthaltend ein Polykondensat.

Mehrschichtverbunde aus u. a. Polyamiden, Polyestern bzw. Polycarbonaten sind von hohem Interesse, da diese Werkstoffkombinationen Eigenschaften aufweisen, die mit einem Thermoplasten allein nicht zu erreichen sind. Weiterhin können mit Blends aus Polyamiden und Polyestern sowie aus Polyamiden und Polycarbonaten deutlich verbesserte Eigenschaften erzielt werden, wie z. B. geringere Wasseraufnahme, verbesserte Spannungsrißbeständigkeit, hohes Zähigkeitsniveau und gute Dimensionsstabilität.

Polyamide und Polyester bzw. Polycarbonate sind in der Regel nicht miteinander mischbar. Daher müssen sowohl im Fall von Blends als auch bei Mehrschichtverbunden geeignete Verträglichkeits- bzw. Haftvermittler eingesetzt werden.

Es werden bereits Blends aus Polyamiden und Polyestern bzw. Polycarbonaten unter Zugabe von Verträglichkeitsvermittlern beschrieben. Als solche werden z. B. spezielle amorphe Polyamide (US-PS 4 798 874), Maleinimid-Copolymerisate (EP-A-361 230), hochmolekulare Epoxyverbindungen (DE-OS 3 833 286), Styrol-Copolymerisate (DE-OS 3 832 849) oder hydroxylgruppenhaltige Polymere (DE-OSS 3 641 499, 3 605 573) genannt. Statistische Copolykondensate aus Polyamiden und Polyestern sind aus US-PS 4 788 249 bekannt, wobei diese allerdings aus den Monomeren hergestellt werden müssen und nicht durch einfaches Schmelzemischen der Polykondensatkomponenten erzeugt werden können. Die Herstellbarkeit der Copolykondensate ist darüber hinaus auf spezielle Systeme beschränkt.

Copolykondensate aus Polyamiden und Polyestern werden in US-PS 4 417 031 beschrieben. Danach werden Polyamide und Polyester unter Zugabe von einem oder mehreren Phosphitkatalysatoren in der Schmelze gemischt. In einer weiteren Druckschrift (WO 90/12836) werden als Katalysatoren Aryl-Phosphoryl-Azide zur Verbesserung der Verträglichkeit zwischen Polyamiden und Polyestern beschrieben. Nachteilig bei diesem Verfahren ist, daß der Katalysator in der Masse verbleibt und somit Ursache für weitere nicht kontrollierbare Reaktionen, wie z. B. Molekulargewichtsauf- oder -abbau, beschleunigten Abbau durch Hydrolyse, bei der Verarbeitung ist.

Aufgabe der Erfindung ist es, eine Formmasse zu entwickeln, die als Verträglichkeits- und Haftvermittler geeignet ist und die geschilderten Nachteile des Standes der Technik vermeidet.

Diese Aufgabe wird gelöst durch Formmassen enthaltend ein Polykondensat aus
A. 0,9 bis 99 Gew.-% eines Polyamids
B. 99 bis 0,9 Gew.-% eines linearen, kristallinen Polyesters
C. 0,1 bis 10 Gew.-% einer Verbindung der allgemeinen Formel (A) 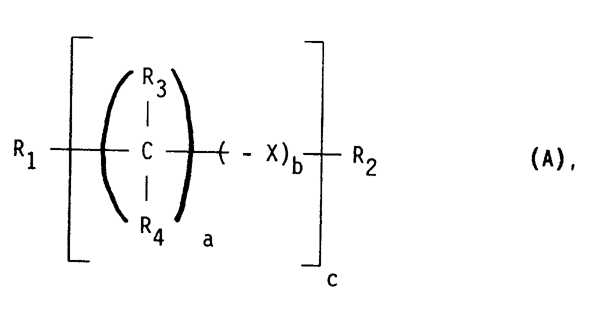 in der
   - R₁ und R₂:: 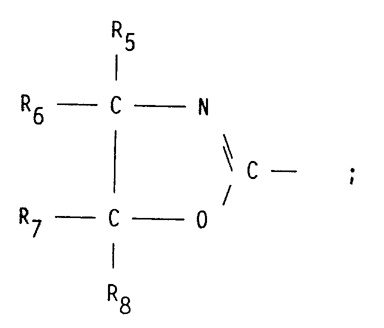
   - R₃ bis R₈:: -H; aliphatischer oder cycloaliphatischer C₁₋₁₂-Rest, wobei R₃ bis R₈ gleich oder verschieden sein können;
   - X:: aromatischer C₆₋₁₂-Rest, cycloaliphatischer C₃₋₁₂-Rest
   - a:: 0 bis 12;
   - b:: 0; 1;
   - c:: 0; 1
   bedeuten.

Als Polyamide (Komponente A.) kommen in erster Linie aliphatische Homo- und Copolykondensate in Frage. Als Beispiel seien die 4.6-; 6.6-; 6.12-; 8.10-; 10.10-Polyamide o. ä. genannt. Bevorzugt werden 6-; 10.12-; 11-; 12- sowie 12.12-Polyamide. [Die Kennzeichnung der Polyamide entspricht internationaler Norm, wobei die erste(n) Ziffer(n) die C-Atomzahl des Ausgangsdiamins und die letzte(n) Ziffer(n) die C-Atomzahl der Dicarbonsäure angeben. Wird nur eine Zahl genannt, so bedeutet dies, daß von einer alpha,omega-Aminocarbonsäure bzw. von dem davon abgeleitetem Lactam ausgegangen worden ist - H. Domininghaus, "**Die Kunststoffe und ihre Eigenschaften**", Seite 272, VDI-Verlag (1976).]

Sofern Copolyamide verwendet werden, können diese z. B. Adipinsäure, Sebacinsäure, Korksäure, Isophthalsäure, Terephthalsäure als Cosäure bzw. Bis(4'-aminocyclohexyl)-methan, Trimethylhexamethylendiamin, Hexamethylendiamin o. ä. Codiamine enthalten.

Die Herstellung dieser Polyamide ist bekannt (z. B. D. B. Jacobs, J. Zimmermann, **Polymerization Processes**, S. 424-67; Interscience Publishers, New York (1977); DE-AS 21 52 194).

Ebenfalls geeignet als Polyamide sind gemischte aliphatische/aromatische Polykondensate wie sie z. B. in den US-PSS 2 071 250; 2 071 251; 2 130 523; 2 130 948; 2 241 322; 2 312 966; 2 512 606; 3 393 210 bzw. in Kirk-Othmer, **Encyclopedia of Chemical Technology**, Wiley & Sons (1982), 3. Aufl., Vol. 18, Seiten 328 und 435, beschrieben werden. Gleichfalls als Polyamide geeignete Polykondensate sind Poly(etheresteramide) bzw. Poly(etheramide). Derartige Produkte werden z. B. in DE-OSS 27 12 987, 25 23 991, 30 06 961 genannt.

Das Molekulargewicht (Zahlenmittel) der Polyamide liegt oberhalb von 5 000, vorzugsweise oberhalb von 10 000 - entsprechend einer relativen Viskosität (ηrel) im Bereich von 1,5 bis 2,8.

Die genannten Polyamide werden für sich oder als Gemische eingesetzt.

Insbesondere werden Polyamide (Komponente A.) eingesetzt, bei denen mindestens 50 %, vorzugsweise 70 % aller im Polyamid vorhandenen Endgruppen Aminoendgruppen darstellen.

Die linearen, kristallinen Polyester (Komponente B.) weisen nachstehende Grundstruktur auf 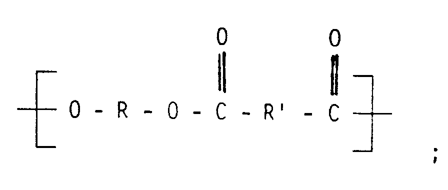
dabei stellt R einen divalenten verzweigten oder nichtverzweigten aliphatischen und/oder cycloaliphatischen Rest mit 2 bis 12, vorzugsweise 2 bis 8, C-Atomen in der Kohlenstoffkette und R' einen divalenten aromatischen Rest mit 6 bis 20, vorzugsweise 8 bis 12, C-Atomen im Kohlenstoffgerüst dar.

Als Beispiel für Diole seien Ethylenglykol, Trimethylenglykol, Tetramethylenglykol, Hexamethylenglykol, Neopentylglykol, Cyclohexandimethanol o. ä. genannt.

Bis zu 25 Mol-% des genannten Diols können durch ein zweites, bereits oben genanntes Diol oder durch ein Diol mit nachstehender allgemeiner Formel 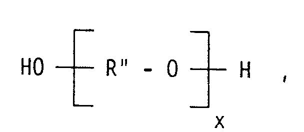
wobei R'' einen zweiwertigen Rest mit 2 bis 4 C-Atomen bedeutet und x einen Wert von 2 bis 50 annehmen kann, ersetzt sein.

Bevorzugt als Diole werden Ethylenglykol und Tetramethylenglykol eingesetzt.

Als aromatische Dicarbonsäure kommen z. B. Terephthalsäure, Isophthalsäure, 1.4-, 1.5-, 2.6- bzw. 2.7-Naphthalindicarbonsäure, Diphensäure, Diphenylether-4.4'-dicarbonsäure in Frage.

Bis zu 20 Mol-% dieser Dicarbonsäuren können durch aliphatische Dicarbonsäuren wie z. B. Bernsteinsäure, Maleinsäure, Fumarsäure, Sebacinsäure, Dodecandisäure u. a. ersetzt sein.

Die Herstellung der linearen, kristallinen Polyester gehört zum Stand der Technik (DE-OSS 24 07 155, 24 07 156; **Ullmanns Encyclopädie der technischen Chemie**, Verlag Chemie GmbH, Weinheim (1980), 4. Aufl., Bd. 19, Seite 65 ff.).

Insbesondere werden Polyester (Komponente B.) eingesetzt, bei denen mindestens 50 %, vorzugsweise 70 % aller im Polyester vorhandenen Endgruppen Carboxylendgruppen darstellen.

Die erfindungsgemäß eingesetzten Polyester weisen eine Viskositätszahl (J-Wert) im Bereich von 80 bis 240 cm³/g auf.

Die Polyamide (Komponente A) und/oder die linearen, kristallinen Polyester (Komponente B) können bis zu 40 Gew.-% andere Thermoplaste enthalten, sofern diese die grundsätzlich geforderten Eigenschaften nicht stören.

Insbesondere seien hier Polycarbonat (H. Schnell, **Chemistry and Physics of Polycarbonates**, Interscience Publishers, New York 1981), Acrylnitril/ Styrol/Butadien- (Houben-Weyl, **Methoden der organischen Chemie**, Bd. 14/1, Georg Thieme Verlag Stuttgart, S. 393 - 406; **Ullmanns Encyclopädie der technischen Chemie**, 4. Auflage, Bd. 19, Verlag Chemie Weinheim (1981), S. 279 - 284), Acrylnitril/Styrol/Acrylat- (**Ullmanns** **Encyclopädie der technischen Chemie**, 4. Auflage, Bd. 19, Verlag Chemie Weinheim (1981), S. 277 - 295), Acrylnitril/Styrol-Copolymerisat (**Ullmanns Encyclopädie der technischen Chemie**, 4. Auflage, Bd. 19, Verlag Chemie Weinheim (1981), S. 273 ff.) oder Polyphenylenether (DE-OSS 32 24 691 u. 32 24 692, US-PSS 3 306 874, 3 306 875 u. 4 028 341) genannt.

Bei der Komponente C. handelt es sich um eine Verbindung der allgemeinen Formel (A) 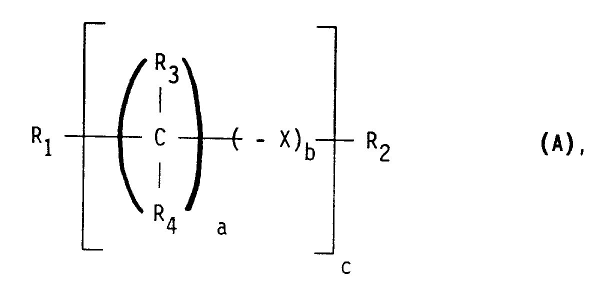
in der
- R₁ und R₂:: 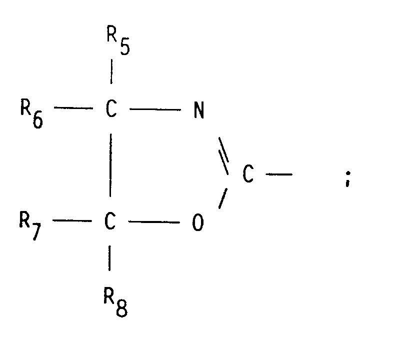
R₃ bis R₈: -H, einen aliphatischen oder cycloaliphatischen C₁₋₁₂-Rest, X = einen aromatischen C₆₋₁₂-Rest bzw. einen cycloaliphatischen C₃₋₁₂-Rest sowie a: 0 bis 12, b bzw. c: 0 oder 1 bedeuten. Die verschiedenen Substituenten R oder X bzw. a, b oder c können gleich oder verschieden sein.

Bevorzugte Verbindungen stellen solche dar, bei denen in der allgemeinen Formel R₁ und R₂ gleich sind sowie a = 0, b = c = 1, 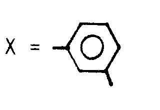
und R₃ bis R₈ = -H oder a = 6, b = 0, c = 1, R₃ bis R₈ = -H oder a = 0, b = c = 1, 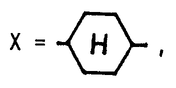
R₃ bis R₈ = -H sind.

Insbesonders bevorzugte Verbindungen sind beispielsweise 2,2'-Methylen-bis(2-oxazolin), 2,2'-Ethylen-bis(2-oxazolin), 2,2'-Hexamethylen-bis(2-oxazolin), 2,2'-Methylen-bis(2-oxazolin), 2,2'-p-Phenylen-bis-(2-oxazolin), 2,2'-m-Phenylen-bis-(2-oxazolin), 1,4-Cyclohexyliden-bis-(2-oxazolin).

Die Verbindungen können allein oder im Gemisch eingesetzt werden.

Die in den erfindungsgemäßen Formmassen enthaltenen Polykondensate setzen sich wie folgt zusammen:
A. 0,9 bis 99 Gew.-% Polyamid
B. 99 bis 0,9 Gew.-% linearer, kristalliner Polyester
C. 0,1 bis 10 Gew.-% Verbindung der allgemeinen Formel (A).

Ein bevorzugtes Polykondensat besteht aus
A. 29,5 bis 70 Gew.-% Polyamid
B. 70 bis 29,5 Gew.-% linearem, kristallinem Polyester
C. 0,5 bis 5 Gew.-% einer Verbindung der allgemeinen Formel (A).

Für die Herstellung der Polykondensate hat es sich als günstig - wenn auch nicht als nötig - erwiesen, das Ausgangsverhältnis der Komponenten A., B. und C. so zu wählen, daß die Endgruppen der Komponenten sich in nachstehenden Bereichen bewegen:
- alpha :: beta = 0,5 bis 2,0
- beta :: gamma = 0,8 bis 2,0

- Hierbei bedeutet alpha:: NH₂-Endgruppenkonzentration in mmol/kg Polyamid multipliziert mit dem Gewichtsanteil (ausgedrückt in Gew.-%) der Komponente A.
- beta :: COOH-Endgruppenkonzentration in mmol/kg Polyester multipliziert mit dem Gewichtsanteil (ausgedrückt in Gew.-%) der Komponente B.
- gamma:: reziprokes Molekulargewicht der Komponente C. multipliziert mit dem Gewichtsanteil (ausgedrückt in Gew.-%) der Komponente C.

Die Herstellung der erfindungsgemäßen Formmassen erfolgt in der Schmelze, besonders bevorzugt in einem kontinuierlichen Knetaggregat, wie z. B. einem Doppelwellenextruder, in der Form, daß die Polyamid- und die Polyester-Komponente unter Zusatz einer ausreichenden Menge an Komponente C. bei hohen Scherraten und bei Temperaturen zwischen 200 und 350 °C in der Schmelze innig vermischt wird.

Die untere Grenze der Arbeitstemperatur wird durch den Schmelzpunkt der höher schmelzenden Komponente gegeben, die obere Temperaturgrenze durch möglicherweise auftretende Zersetzungs- und Abbaureaktionen. In der Regel wird es sich als günstiger erweisen, die Massetemperatur der Schmelze nahe der oberen Temperaturgrenze zu halten. Zum Entfernen auftretender flüchtiger Produkte ist es vorteilhaft, die Schmelze durch Anlegen eines verminderten Druckes zu entgasen.

Die Reihenfolge der Dosierung der Komponenten A. bis C. ist grundsätzlich beliebig, bevorzugt wird jedoch eine Verfahrensweise, indem zunächst eine der Komponenten A. bzw. B. mit der Komponente C. umgeschmolzen wird und diese Mischung anschließend mit der zweiten Komponente schmelzegemischt wird. Dies kann in einem oder in zwei Extrusionsschritten erfolgen, wobei die zweite Komponente stromabwärts zudosiert wird. Besonders bevorzugt ist ein Verfahren, bei dem zunächst die Polyester-Komponente mit der Komponente C. umgeschmolzen und diese Mischung anschließend mit der Polyamid-Komponente schmelzegemischt wird.

Sofern erforderlich, können die Polykondensate schlagzäh eingestellt werden. Geeignete Polymere sind z. B. Ethylen/Propylen- oder Ethylen/Propylen/Dien-Copolymere (EP-A-295 076), Polypentenylen, Polyoctenylen oder statistische bzw. blockartig aufgebaute Copolymere aus alkenylaromatischen Verbindungen mit aliphatischen Olefinen oder Dienen (EP-A-261 748). Weiterhin seien schlagzähmachende Kautschuke genannt: Kern/Schale-Kautschuke mit einem zähelastischen Kern aus (Meth)Acrylat-, Butadien- oder Styrol/Butadien-Kautschuk mit Glastemperaturen T_{g} < -10 °C, wobei der Kern vernetzt sein kann. Die Schale kann aus Styrol und/oder Methylmethacrylat und/oder weiteren, ggf. Säure- oder Säureanhydridgruppen tragenden, ungesättigten Monomeren aufgebaut sein (DE-OSS 21 44 528, 37 28 685).

Den Formmassen können übliche Hilfs- und Zusatzstoffe wie z. B. Flammschutzmittel, Stabilisatoren, Verarbeitungshilfsmittel, Viskositätsverbesserer, Füllstoffe, Pigmente o. ä. zugefügt werden.

Unerwarteterweise eignen sich die erfindungsgemäßen Formmassen als Verträglichkeits- bzw. Haftvermittler. So wird es durch Zugabe der Formmassen möglich, Blends aus z. B. Polyamid/Polyester oder Polyamid/Polycarbonat zu erzeugen, die nicht die Nachteile aufweisen, welche sich durch Stoffunverträglichkeit üblicherweise ergeben. In gleichem Sinne eignen sich die erfindungsgemäßen Formmassen als haftvermittelnde Schicht zwischen z. B. Polyamid/Polyester oder auch Polyamid/Polycarbonat. So wird es möglich, Verbundwerkstoffe herzustellen, welche eine kraftschlüssige Verbindung zwischen den verschiedenen Schichten ergeben.

Die in den Beispielen aufgeführten Ergebnisse wurden mit Hilfe nachstehender Meßverfahren bestimmt.

Die **Bestimmung der Lösungsviskosität** (rel. Viskosität ηᵣₑₗ) **der Polyamide** erfolgt unter Verwendung einer 0,5 Gew.-%igen m-Kresol-Lösung bei 25 °C gemäß DIN 53 727/ISO 307.

Die **Bestimmung der Lösungsviskosität** (Viskositätszahl J) **der Polyester** erfolgt in einer 0,5 Gew.-%igen Phenol/o-Dichlorbenzol-Lösung (Gewichts-Verhältnis: 1 : 1) bei 25 °C gemäß DIN 53 728/ ISO 1628 - Teil 5.

Zur **Bestimmung der Aminoendgruppen** wird 1 g der Komponente A. in 50 ml m-Kresol bei 25 °C gelöst. Die Lösung wird mit Perchlorsäure potentiometrisch titriert.

Zur **Bestimmung der Carboxylendgruppen** in der Komponente A. bzw. B. wird 1 g Polykondensat in 50 ml Benzylalkohol unter Stickstoffabdeckung bei 165 °C gelöst. Die Lösezeit beträgt maximal 20 min. Die Lösung wird mit einer Lösung von KOH in Ethylenglycol (0,05 mol KOH/l) gegen Phenolphthalein bis zum Farbumschlag titriert.

Die **Prüfung der mechanischen Trennbarkeit** an der Grenzfläche erfolgt mit einem Metallkeil (Schneidenwinkel: 5 Grad; Auflagegewicht: 2,5 kg), wobei versucht wird, die zu prüfende Materialgrenzschicht zu trennen. Erfolgt die Trennung an der Grenze zwischen den Komponenten, so ist die Haftung schlecht. Erfolgt die Trennung dagegen ganz oder teilweise innerhalb einer der beiden Komponenten, so liegt eine gute Anhaftung vor.

Mit Buchstaben gekennzeichnete Beispiele sind nicht erfindungsgemäß.-

### Beispiele

### A. Komponente A.

**A 1:** Polyamid 12 (ηᵣₑₗ: 1.91; Gehalt an Aminoendgruppen: 58 mmol/kg; Gehalt an Carboxylendgruppen 11 mmol/kg)
**A 2:** Polyamid 12 (ηᵣₑₗ: 1.66; Gehalt an Aminoendgruppen: 48 mmol/kg; Gehalt an Carboxylendgruppen 52 mmol/kg)
**A 3:** Polyamid 612 (ηᵣₑₗ: 1.94; Gehalt an Aminoendgruppen: 75 mmol/kg; Gehalt an Carboxylendgruppen 33 mmol/kg)
**A 4:** Polyamid 66 (ηᵣₑₗ: 1.91; Gehalt an Aminoendgruppen: 72 mmol/kg; Gehalt an Carboxylendgruppen 43 mmol/kg)

### B. Komponente B.

**B 1:** Homopolybutylenterephthalat (Viskositätszahl J: 169 cm³/g; Gehalt an Carboxylendgruppen: 40 mmol/kg)
**B 2:** Homopolybutylenterephthalat (Viskositätszahl J: 147 cm³/g; Gehalt an Carboxylendgruppen: 34 mmol/kg)
**B 3:** Homopolybutylenterephthalat (Viskositätszahl J: 108 cm³/g; Gehalt an Carboxylendgruppen: 54 mmol/kg)

### C. Komponente C.

**C 1:** 2,2'-p-Phenylen-bis-(2-oxazolin)
**C 2:** 2,2'-m-Phenylen-bis-(2-oxazolin)
**C 3:** 2,2'-1,4-Cyclohexyliden-bis-(2-oxazolin)

### D. Herstellung der Formmassen

### Versuch 1

20 kg B 2 und 0,24 kg C 2 werden auf einem Doppelwellenextruder Berstorff ZE 40 bei einer Zylindertemperatur von 250 °C, einem Massedurchsatz von 40 kg/h und einer Schneckendrehzahl von 300 min⁻¹ umgeschmolzen. In einem zweiten Extrusionschritt werden 10 kg dieses modifizierten Polybutylenterephthalats mit 10 kg A 1 bei einer Zylindertemperatur von 250 °C, einem Massedurchsatz von 40 kg/h und einer Schneckendrehzahl von 250 min⁻¹ schmelzegemischt.

### Versuch 2

20 kg B 2 und 0,24 kg C 1 werden auf einem Doppelwellenextruder Berstorff ZE 40 bei einer Zylindertemperatur von 250 °C, einem Massedurchsatz von 40 kg/h und einer Schneckendrehzahl von 300 min⁻¹ umgeschmolzen. In einem zweiten Extrusionschritt werden 11 kg dieses modifizierten Polybutylenterephthalats mit 9 kg A 1 bei einer Zylindertemperatur von 250 °C, einem Massedurchsatz von 40 kg/h und einer Schneckendrehzahl von 250 min⁻¹ schmelzegemischt.

### Versuch 3

3 kg B 1 und 0,018 kg C 2 werden auf einem Doppelwellenextruder Leistriz LSM 30.34 bei einer Zylindertemperatur von 245 °C, einem Massedurchsatz von 4 kg/h und einer Schneckendrehzahl von 60 min⁻¹ umgeschmolzen. In einem zweiten Extrusionschritt werden 1,5 kg dieses modifizierten Polybutylenterephthalats mit 1,5 kg A 1 bei einer Zylindertemperatur von 270 °C, einem Massedurchsatz von 3 kg/h und einer Schneckendrehzahl von 100 min⁻¹ schmelzegemischt.

### Versuch 4

3 kg B 1 und 0,048 kg C 2 werden auf einem Doppelwellenextruder Leistriz LSM 30.34 bei einer Zylindertemperatur von 245 °C, einem Massedurchsatz von 4 kg/h und einer Schneckendrehzahl von 60 min⁻¹ umgeschmolzen. In einem zweiten Extrusionschritt werden 1,5 kg dieses modifizierten Polybutylenterephthalats mit 1,5 kg A 1 bei einer Zylindertemperatur von 270 °C, einem Massedurchsatz von 3 kg/h und einer Schneckendrehzahl von 100 min⁻¹ schmelzegemischt.

### Versuch 5

3 kg B 1 und 0,048 kg C 2 werden auf einem Doppelwellenextruder Leistriz LSM 30.34 bei einer Zylindertemperatur von 245 °C, einem Massedurchsatz von 4 kg/h und einer Schneckendrehzahl von 60 min⁻¹ umgeschmolzen. In einem zweiten Extrusionschritt werden 2,8 kg dieses modifizierten Polybutylenterephthalats mit 1,2 kg A 1 bei einer Zylindertemperatur von 250 °C, einem Massedurchsatz von 4 kg/h und einer Schneckendrehzahl von 75 min⁻¹ schmelzegemischt.

### Versuch 6

3 kg B 2 und 0,036 kg C 2 werden auf einem Doppelwellenextruder Leistriz LSM 30.34 bei einer Zylindertemperatur von 250 °C, einem Massedurchsatz von 5 kg/h und einer Schneckendrehzahl von 100 min⁻¹ umgeschmolzen. In einem zweiten Extrusionschritt werden 1,5 kg dieses modifizierten Polybutylenterephthalats mit 1,5 kg A 2 bei einer Zylindertemperatur von 250 °C, einem Massedurchsatz von 4 kg/h und einer Schneckendrehzahl von 200 min⁻¹ schmelzegemischt.

### Versuch 7

3 kg B 3 und 0,048 kg C 2 werden auf einem Doppelwellenextruder Leistriz LSM 30.34 bei einer Zylindertemperatur von 250 °C, einem Massedurchsatz von 5 kg/h und einer Schneckendrehzahl von 100 min⁻¹ umgeschmolzen. In einem zweiten Extrusionschritt werden 2,8 kg dieses modifizierten Polybutylenterephthalats mit 1,2 kg A 1 bei einer Zylindertemperatur von 250 °C, einem Massedurchsatz von 4 kg/h und einer Schneckendrehzahl von 100 min⁻¹ schmelzegemischt.

### Versuch 8

3 kg B 1 und 0,036 kg C 2 werden auf einem Doppelwellenextruder Leistriz LSM 30.34 bei einer Zylindertemperatur von 250 °C, einem Massedurchsatz von 4 kg/h und einer Schneckendrehzahl von 100 min⁻¹ umgeschmolzen. In einem zweiten Extrusionschritt werden 2 kg dieses modifizierten Polybutylenterephthalats mit 2 kg A 3 bei einer Zylindertemperatur von 250 °C, einem Massedurchsatz von 4 kg/h und einer Schneckendrehzahl von 200 min⁻¹ schmelzegemischt.

### Versuch 9

3 kg B 3 und 0,048 kg C 2 werden auf einem Doppelwellenextruder Leistriz LSM 30.34 bei einer Zylindertemperatur von 250 °C, einem Massedurchsatz von 4 kg/h und einer Schneckendrehzahl von 100 min⁻¹ umgeschmolzen. In einem zweiten Extrusionschritt werden 2,8 kg dieses modifizierten Polybutylenterephthalats mit 1,2 kg A 4 bei einer Zylindertemperatur von 260 °C, einem Massedurchsatz von 4 kg/h und einer Schneckendrehzahl von 200 min⁻¹ schmelzegemischt.

### Versuch 10

3 kg B 1 und 0,036 kg C 3 werden auf einem Doppelwellenextruder Leistriz LSM 30.34 bei einer Zylindertemperatur von 250 °C, einem Massedurchsatz von 4 kg/h und einer Schneckendrehzahl von 100 min⁻¹ umgeschmolzen. In einem zweiten Extrusionschritt werden 2 kg dieses modifizierten Polybutylenterephthalats mit 2 kg A 1 bei einer Zylindertemperatur von 250 °C, einem Massedurchsatz von 4 kg/h und einer Schneckendrehzahl von 200 min⁻¹ schmelzegemischt.

### Versuch A

20 kg B 2 werden mit 20 kg A 1 auf einem Doppelwellenextruder Berstorff ZE 40 bei einer Zylindertemperatur von 250 °C, einem Massedurchsatz von 40 kg/h und einer Schneckendrehzahl von 300 min⁻¹ umgeschmolzen.

### Versuch B

2 kg B 1 werden mit 2 kg A 1 auf einem Doppelwellenextruder Leistriz LSM 30.34 bei einer Zylindertemperatur von 250 °C, einem Massedurchsatz von 4 kg/h und einer Schneckendrehzahl von 100 min⁻¹ umgeschmolzen.

### Versuch C

2 kg B 3 werden mit 2 kg A 3 auf einem Doppelwellenextruder Leistriz LSM 30.34 bei einer Zylindertemperatur von 250 °C, einem Massedurchsatz von 4 kg/h und einer Schneckendrehzahl von 100 min⁻¹ umgeschmolzen.

### E. Beurteilung der Formmassen als Verträglichkeitsvermittler

Die Beurteilung auf die Eignung als Verträglichkeitsvermittler der erfindungsgemäßen Formmassen erfolgt durch visuelle Beurteilung des Strangbildes und der Delaminierungsneigung nach Verstrecken. Unverträgliche Polykondensatmischungen sind nur schwer als Strang abzuziehen, da sie eine starke Strangaufweitung aufweisen. Die nicht vorhandene Verträglichkeit zwischen den Polykondensatkomponenten wird durch eine starke Delaminierungsneigung insbesondere nach Verstrecken eines Stranges deutlich. Eine verringerte oder ausbleibende Delaminierung ist daher ein Maß für die verträglichkeitsvermittelnde Wirkung der erfindungsgemäßen Formmassen gewertet.

**Tabelle 1**

| **Versuch** | **Strangaufweitung** | **Delaminierung nach Verstrecken** |
|---|---|---|
| Versuch 1 | keine | keine |
| Versuch 2 | keine | keine |
| Versuch 3 | keine | keine |
| Versuch 4 | keine | keine |
| Versuch 5 | keine | keine |
| Versuch 6 | keine | keine |
| Versuch 7 | keine | keine |
| Versuch 8 | keine | keine |
| Versuch 9 | keine | keine |
| Versuch 10 | keine | keine |
| Versuch A | stark | stark |
| Versuch B | stark | stark |
| Versuch C | mittel | mittel |

### F. Beurteilung der Formmassen als Haftvermittler

Die Eignung der erfindungsgemäßen Formmassen als Haftvermittler wird an Mehrschichtverbunden Polyamid/Polyester ermittelt. Die Mehrschichtverbunde werden folgendermaßen hergestellt:
Die Komponenten A. bzw. B. werden zunächst einzeln zu ca. 1 mm starken Preßplatten verarbeitet (Preßzeit: 10 min; Preßtemperatur: 10 °C oberhalb der Schmelz- bzw. Erweichungstemperatur). Es werden keinerlei Formtrennmittel verwendet. Die Einzelplatten werden danach zu einem Mehrschichtverbund verpreßt. Die Preßtemperatur richtet sich dabei nach dem Material mit dem höchsten Schmelz- bzw. Erweichungspunkt. Die Preßzeit liegt bei 10 min.

**Tabelle 2**

| **Versuch** | **Schicht A** | **Schicht B** | **Zwischenschicht gemäß Versuch** | **mechanisch an Grenzflächen trennbar** |
|---|---|---|---|---|
| 11 | A1 | B1 | 1 | nein |
| 12 | A1 | B1 | 2 | nein |
| 13 | A1 | B1 | 3 | nein |
| 14 | A1 | B1 | 4 | nein |
| 15 | A1 | B1 | 5 | nein |
| 16 | A1 | B1 | 6 | nein |
| 17 | A1 | B1 | 7 | nein |
| 18 | A3 | B2 | 8 | nein |
| 19 | A4 | B1 | 9 | nein |
| 20 | A1 | B1 | 10 | nein |

## Patentansprüche

1. Formmasse enthaltend ein Polykondensat aus
A. 0,9 bis 99 Gew.-% eines Polyamids
B. 99 bis 0,9 Gew.-% eines linearen, kristallinen Polyesters
C. 0,1 bis 10 Gew.-% einer Verbindung der allgemeinen Formel (A) 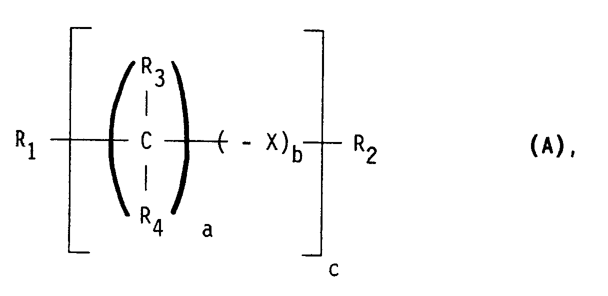 in der
R₁ und R₂: 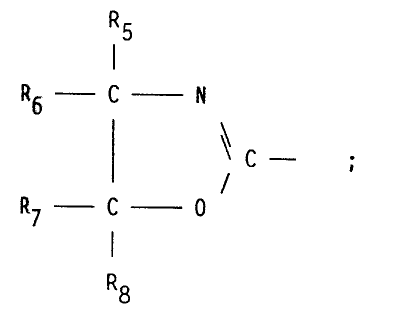
R₃ bis R₈: -H; aliphatischer oder cycloaliphatischer C₁₋₁₂-Rest, wobei R₃ bis R₈ gleich oder verschieden sein können;
X: aromatischer C₆₋₁₂-Rest, cycloaliphatischer C₃₋₁₂-Rest
a: 0 bis 12;
b: 0; 1;
c: 0; 1
bedeuten.

2. Formmasse nach Anspruch 1,
dadurch gekennzeichnet, daß sie ein Polykondensat aus
A. 29,5 bis 70 Gew.-% eines Polyamids
B. 70 bis 29,5 Gew.-% eines linearen, kristallinen Polyesters
C. 0,5 bis 5 Gew.-% einer Verbindung der allgemeinen Formel (A)
enthält.

3. Formmasse nach den Ansprüchen 1 und 2,
dadurch gekennzeichnet,
daß die Substituenten in der allgemeinen Formel (A) der Komponente C. des Polykondensates nachstehende Struktur aufweisen:
R₁ und R₂: 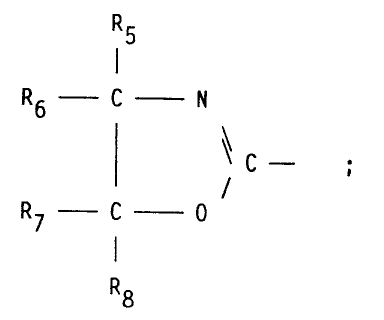
R₃ bis R₈: -H;
X: 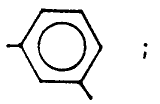
a: 0;
b = c: 1.

4. Formmasse nach den Ansprüchen 1 und 2,
dadurch gekennzeichnet,
daß die Substituenten in der allgemeinen Formel (A) der Komponente C. des Polykondensates nachstehende Struktur aufweisen:
R₁ und R₂: 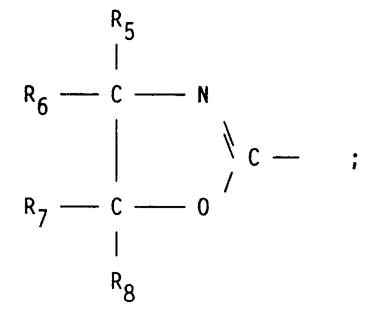
R₃ bis R₈: -H;
a: 6;
b: 0;
c: 1.

5. Formmasse nach den Ansprüchen 1 und 2,
dadurch gekennzeichnet,
daß die Substituenten in der allgemeinen Formel (A) der Komponente C. des Polykondensates nachstehende Struktur aufweisen:
R₁ und R₂: 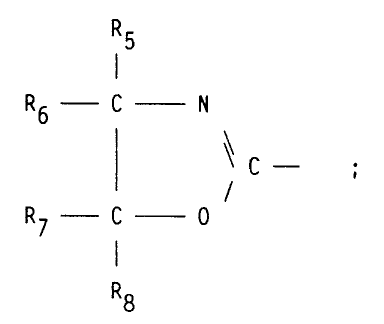
R₃ bis R₈: -H;
X: 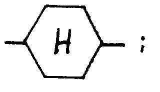
a: 0;
b = c: 1.

6. Formmasse nach den Ansprüchen 1 und 2,
dadurch gekennzeichnet,
daß die Komponente C. 2,2'-m-Phenylen-bis-(2-oxazolin) darstellt.

7. Formmasse nach den Ansprüchen 1 und 2,
dadurch gekennzeichnet,
daß die Komponente C. 1,4-Cyclohexyliden-bis-(2-oxazolin) darstellt.

8. Verwendung der Formmasse nach den Ansprüchen 1 bis 7 als Verträglichkeitsvermittler in Thermoplast-Blends.

9. Verwendung der Formmasse nach den Ansprüchen 1 bis 7 als Haftvermittler in Mehrschicht-Verbundwerkstoffen.
